(19) Europäisches Patentamt
European Patent Office
Office européen des brevets

(11) **EP 4 618 485 A1**

(12) **EUROPEAN PATENT APPLICATION**
published in accordance with Art. 153(4) EPC

(43) Date of publication:
**17.09.2025  Bulletin 2025/38**

(21) Application number: **22964871.2**

(22) Date of filing: **11.11.2022**

(51) International Patent Classification (IPC):
*H04L 27/00* (2006.01)

(52) Cooperative Patent Classification (CPC):
**H04L 27/00**

(86) International application number:
**PCT/CN2022/131482**

(87) International publication number:
**WO 2024/098403 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **HE, Chuanfeng
Dongguan, Guangdong 523860 (CN)**

(74) Representative: **Taor, Simon Edward William et al
Venner Shipley LLP
200 Aldersgate
London EC1A 4HD (GB)**

(54) **WIRELESS COMMUNICATION METHOD AND DEVICE**

(57)    Provided in the embodiments of the present application are a wireless communication method and device. The present application optimizes modulation schemes and/or constellation points associated with subcarriers that carry a high-level signal and a low-level signal in a target signal, so that a modulation depth between the high-level signal and the low-level signal in the target signal meets a demodulation requirement, thereby improving the detection performance of the target signal. The wireless communication method comprises: a first communication device receiving a target signal, wherein the target signal is a signal carrying information by means of a signal amplitude, the target signal comprises a first signal and a second signal, the first signal is at a first level, the second signal is at a second level, and the first level is higher than the second level; and wherein a subcarrier carrying the first signal is associated with a first modulation scheme and/or a first constellation point, and a subcarrier carrying the second signal is associated with a second modulation scheme and/or a second constellation point, or the subcarrier carrying the second signal is a null subcarrier.

200

First Communication Device

Second Communication Device

S210, A second communication device sends a target signal. Here, the target signal is a signal carrying information through a signal amplitude. The target signal includes a first signal and a second signal. The first signal is at a first level, the second signal is at a second level, and the first level is higher than the second level. Here, a subcarrier carrying the first signal is associated with a first modulation mode and/or a first constellation point. A subcarrier carrying the second signal is associated with a second modulation mode and/or a second constellation point, or the subcarrier carrying the second signal is an empty subcarrier.

S220, A first communication device receives the target signal.

**FIG. 10**

**Description**

TECHNICAL FIELD

Embodiments of the disclosure relate to the field of communication, and in particular to a wireless communication method and a device.

BACKGROUND

In the New Radio (NR) system, a receiver having extremely low power and complexity is introduced to receive a signal carrying information through the signal amplitude, such as a Wake Up Signal (WUS). However, in order to correctly demodulate the signal carrying information through the signal amplitude, higher requirements are put forward for the modulation depth between the high and low levels of the signal carrying information through the signal amplitude.

SUMMARY

Embodiments of the disclosure provide a wireless communication method and a device. By optimizing the modulation mode and/or constellation point associated with a subcarrier carrying high-level and low-level signals in a target signal, the modulation depth between the high-level and low-level signals in the target signal may meet the demodulation requirements, which improves the detection performance of the target signal.

In a first aspect, a wireless communication method is provided. The method includes the following operation.

A first communication device receives a target signal.

Here, the target signal is a signal carrying information through a signal amplitude. The target signal includes a first signal and a second signal. The first signal is at a first level, the second signal is at a second level, and the first level is higher than the second level.

Here, a subcarrier carrying the first signal is associated with a first modulation mode and/or a first constellation point. A subcarrier carrying the second signal is associated with a second modulation mode and/or a second constellation point, or the subcarrier carrying the second signal is an empty subcarrier.

In a second aspect, a wireless communication method is provided. The method includes the following operation.

A second communication device sends a target signal.

Here, the target signal is a signal carrying information through a signal amplitude. The target signal includes a first signal and a second signal. The first signal is at a first level, the second signal is at a second level, and the first level is higher than the second level.

Here, a subcarrier carrying the first signal is associated with a first modulation mode and/or a first constellation point. A subcarrier carrying the second signal is associated with a second modulation mode and/or a second constellation point, or the subcarrier carrying the second signal is an empty subcarrier.

In a third aspect, a communication device is provided. The communication device is configured to perform the method in the above first aspect.

Specifically, the communication device includes a functional module configured to perform the method in the above first aspect.

In a fourth aspect, a communication device is provided. The communication device is configured to perform the method in the above second aspect.

Specifically, the communication device includes a functional module configured to perform the method in the above second aspect.

In a fifth aspect, a communication device is provided. The communication device includes a processor and a memory. The memory is configured to store a computer program, and the processor is configured to call and run the computer program stored in the memory, for enabling the communication device to perform the method in the above first aspect.

In a sixth aspect, a communication device is provided. The communication device includes a processor and a memory. The memory is configured to store a computer program, and the processor is configured to call and run the computer program stored in the memory, for enabling the communication device to perform the method in the above second aspect.

In a seventh aspect, an apparatus is provided. The apparatus is configured to implement the method in any one of the above first to second aspects.

Specifically, the apparatus includes a processor configured to call and run a computer program in a memory, for enabling a device having installed thereon the apparatus to perform the method in any one of the above first to second aspects.

In an eighth aspect, a computer-readable storage medium is provided. The computer-readable storage medium is configured to store a computer program that enables a computer to perform the method in any one of the above first to second aspects.

In a ninth aspect, a computer program product is provided. The computer program product includes computer program instructions that enable a computer to perform the method in any one of the above first to second aspects.

In a tenth aspect, a computer program is provided. The computer program, when run on a computer, enables the computer to perform the method in any one of the above first to second aspects.

With the above technical solution, by optimizing the modulation mode and/or constellation point associated with the subcarrier carrying high-level and low-level signals in the target signal, the modulation depth between the high-level and low-level signals in the target signal may meet the demodulation requirements, which improves the detection performance of the target signal.

BRIEF DESCRIPTION OF THE DRAWINGS

FIG. 1 is a schematic diagram of an architecture of a communication system to which an embodiment of the disclosure is applied.

FIG. 2 is a system diagram of a receiver based on zero-power wake up provided by the disclosure.

FIG. 3 is a schematic diagram of a wake-up radio physical layer protocol data unit (WUR PPDU) frame provided by the disclosure.

FIG. 4 is a schematic diagram of On-Off Keying (OOK) modulation on WUR data provided by the disclosure.

FIG. 5 is a schematic diagram of an Multi-carrier (MC)-OOK signal generated by multi-carrier modulation provided by the disclosure.

FIG. 6 is a schematic diagram of zero-power communication provided by the disclosure.

FIG. 7 is a schematic diagram of back scattering communication provided by the disclosure.

FIG. 8 is a schematic diagram of power harvesting provided by the disclosure.

FIG. 9 is a schematic diagram of a circuit of resistor load modulation provided by the disclosure.

FIG. 10 is a schematic flowchart of a wireless communication method provided according to an embodiment of the disclosure.

FIG. 11 is a schematic diagram of mapping of WUS signals and data signals provided according to an embodiment of the disclosure.

FIG. 12 is a schematic diagram of a modulation depth provided according to an embodiment of the disclosure.

FIG. 13 is a schematic diagram of constellation point area A and constellation point area B provided according to an embodiment of the disclosure.

FIG. 14 is a schematic diagram of an on signal and an off signal provided according to an embodiment of the disclosure.

FIG. 15 is a schematic diagram of a constellation point having a higher amplitude value in case of 256 Quadrature Amplitude Modulation (QAM) provided according to an embodiment of the disclosure.

FIG. 16 is a schematic diagram of a constellation point having a higher amplitude values in case of Quadrature Phase Shift Keying (QPSK) provided according to an embodiment of the disclosure.

FIG. 17 is a schematic block diagram of a communication device provided according to an embodiment of the disclosure.

FIG. 18 is a schematic block diagram of another communication device provided according to an embodiment of the disclosure.

FIG. 19 is a schematic block diagram of yet another communication device provided according to an embodiment of the disclosure.

FIG. 20 is a schematic block diagram of an apparatus provided according to an embodiment of the disclosure.

FIG. 21 is a schematic block diagram of a communication system provided according to an embodiment of the disclosure.

DETAILED DESCRIPTION

The technical solution in the embodiments of the disclosure will be described below in combination with the drawings in the embodiments of the disclosure. It is apparent that the described embodiments are a part of the embodiments of the disclosure and not all of the embodiments. For the embodiments of the disclosure, all other embodiments obtained by those of ordinary skill in the art without making creative labor fall within the scope of protection of the disclosure.

The technical solution of the embodiments of the disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced Long Term Evolution (LTE-A) system, a New Radio (NR) system, an evolution system of the NR system, an LTE-based access to unlicensed spectrum (LTE-U) system, an NR-based access to unlicensed spectrum (NR-U) system, a Non-Terrestrial Networks (NTN) system, a Universal Mobile Telecommunication System (UMTS), a Wireless Local Area Network (WLAN), an internet of things (IoT), a Wireless Fidelity (WiFi), a 5th-Generation (5G) system, a 6th-Generation (6G) system, or other communication systems.

Generally, a conventional communication system support a limited number of connections and is easy to implement. However, with the development of the communication technology, a mobile communication system will not only support conventional communication, but also support, for example, Device to Device (D2D) communication, Machine to Machine (M2M) communication, Machine Type Communication (MTC), Vehicle to Vehicle (V2V) communication, sidelink (SL) communication, Vehicle to everything (V2X) communication, or the like. The embodiments of the disclosure may also be applied to these communication systems.

In some embodiments, the communication system in the embodiments of the disclosure may be applied to a Carrier Aggregation (CA) scenario, a Dual Connectivity (DC) scenario, a Standalone (SA) network deployment scenario, or a Non-Standalone (NSA) network deployment scenario.

In some embodiments, the communication system in the embodiments of the disclosure may be applied to an unlicensed spectrum. Here, the unlicensed spectrum may also be considered as a shared spectrum. Alternatively, the communication system in the embodiments of the disclosure may also be applied to a licensed spectrum. Here, the licensed spectrum may also be considered as an unshared spectrum.

In some embodiments, the communication system in the embodiments of the disclosure may be applied to the FR1 frequency band (corresponding to a frequency range of 410MHz to 7.125GHz) or the FR2 frequency band (corresponding to a frequency range of 24.25GHz to 52.6GHz), and may also be applied to a new frequency band, such as a high-frequency band corresponding to a frequency range of 52.6GHz to 71GHz or a frequency range of 71GHz to 114.25GHz.

The embodiments of the disclosure describe various embodiments in combination with a network device and a terminal device. Here, the terminal device may also be referred to as User Equipment (UE), an access terminal, a user unit, a user station, a mobile station, a remote station, a remote terminal, a mobile device, a user terminal, a terminal, a wireless communication device, a user agent, a user apparatus, or the like.

The terminal device may be a STATION (ST) in the WLAN, a cellular telephone, a cordless telephone, a Session Initiation Protocol (SIP) telephone, a Wireless Local Loop (WLL) station, a Personal Digital Processing (PDA) device, a handheld device having a wireless communication function, a computing device or other processing devices connected to a wireless modem, an in-vehicle device, a wearable device, a terminal device in a next generation communication system, such as a terminal device in an NR network, or a terminal device in a future evolved Public Land Mobile Network (PLMN), or the like.

In the embodiments of the disclosure, the terminal device may be deployed on land, including indoor or outdoor, hand-held, wearable or in-vehicle. The terminal device may also be deployed on water (such as a ship, or the like). The terminal device may also be deployed in the air (e.g. on an aircraft, a balloon, a satellite, or the like).

In the embodiments of the disclosure, the terminal device may be a Mobile Phone, a tablet computer (Pad), a computer having a wireless transmission and reception function, a Virtual Reality (VR) terminal device, an Augmented Reality (AR) terminal device, a wireless terminal device in the industrial control, a wireless terminal device in the self driving, a wireless terminal device in the remote medical, a wireless terminal device in the smart grid, a wireless terminal device in the transportation safety, a wireless terminal device in the smart city, a wireless terminal device in the smart home, an in-vehicle communication device, a wireless communication chip/application specific integrated circuit (ASIC)/ System on Chip (SoC), or the like.

As an example rather than a limitation, in the embodiments of the disclosure, the terminal device may also be a wearable device. The wearable device may also be referred to as a wearable smart device, which is a general name of the wearable devices developed by intelligently designing for daily wears with a wearable technology, such as glasses, gloves, watches, clothing, shoes, or the like. The wearable device is a portable device that is worn directly on the body or integrated into the user's clothes or accessories. The wearable device is not only a hardware device, but also a device realizing powerful functions through software support, data interaction and cloud interaction. Generalized wearable smart devices include devices (such as smart watches, smart glasses, or the like) with full functions and large size, which may implement complete or partial functions without relying on a smartphone, and devices (such as various smart bracelets, smart jewelries, or the like, for monitoring physical signs) which only focus on a certain type of application functions and need to be used in combination with other devices (such as a smartphone).

In the embodiments of the disclosure, the network device may be a device for communicating with a mobile device. The network device may be an Access Point (AP) in the WLAN, a Base Transceiver Station (BTS) in the GSM or CDMA, a NodeB (NB) in the WCDMA, an Evolutional Node B (eNB or eNodeB) in the LTE, a relay station or an AP, an in-vehicle device or a wearable device, a network device or base station (gNB) or a Transmission Reception Point (TRP) in an NR network, a network device in a future evolved PLMN network, a network device in an NTN network, or the like.

As an example rather than a limitation, in the embodiments of the disclosure, the network device may have mobility, for example, the network device may be a mobile device. In some embodiments, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, or the like. In some embodiments, the network device may also be a base station arranged on land, water, or the like.

In the embodiments of the disclosure, the network device may provide services for a cell, and the terminal device communicates with the network device through the transmission resource (such as a frequency-domain resource, which is also referred to as a spectrum resource) used by the cell. The cell may be a cell corresponding to the network device (e.g., a base station), and the cell may belong to a macro base station or a base station corresponding to a Small cell. The small cell here may include a Metro cell, a Micro cell, a Pico cell, a Femto cell, or the like. These small cells have characteristics of small coverage and low transmission power, which are suitable for providing services of high-speed data transmission.

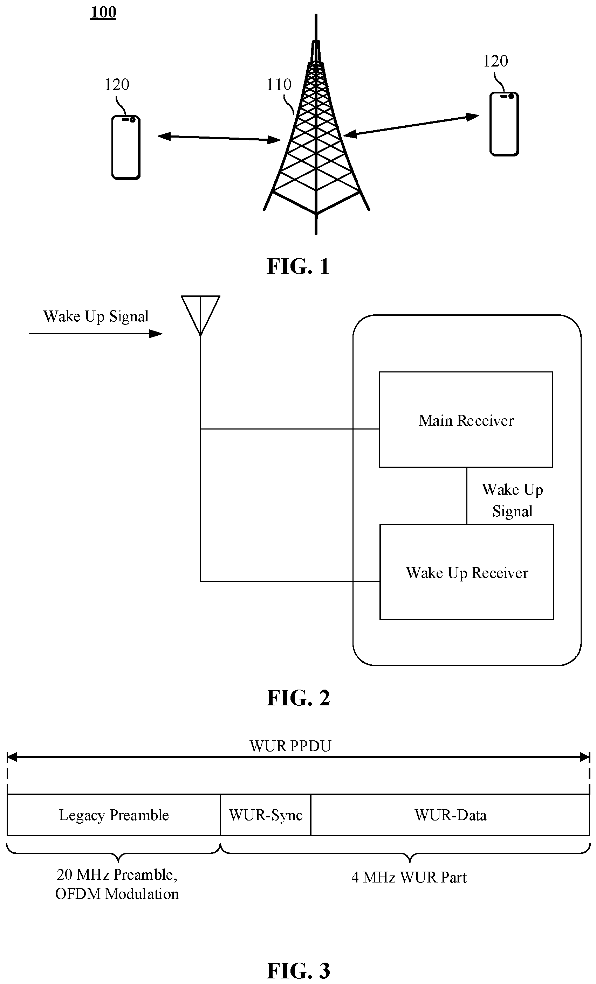

Exemplarily, a communication system 100, to which an embodiment of the disclosure is applied, is shown in FIG. 1. The communication system 100 may include a network device 110, and the network device 110 may be a device that communicates with a terminal device 120 (or referred to as a communication terminal or terminal). The network device 110 may provide communication coverage for a specific geographic area and may communicate with a terminal device located within the coverage area.

FIG. 1 exemplarily illustrates a network device and two terminal devices. In some embodiments, the communication system 100 may include multiple network devices, and other numbers of terminal devices may be included within the coverage area of each network device, which is not limited by the embodiments of the disclosure.

In some embodiments, the communication system 100 may further include other network entities, such as a network controller or a mobile management entity, which is not limited by the embodiments of the disclosure.

It is to be understood that a device in the network/system in the embodiments of the disclosure, which has a communication function, may be referred to as a communication device. Taking the communication system 100 shown in FIG. 1 as an example, the communication device may include a network device 110 and a terminal device 120 which have a communication function. The network device 110 and the terminal device 120 may be the specific devices described above, which will not be repeated here. The communication device may further include another device in the communication system 100, such as a network controller, a mobile management entity, or other network entities, which is not limited by the embodiments of the disclosure.

It is to be understood that the terms "system" and "network" may often be used interchangeably herein. The term "and/or" herein is only a description of an association relationship of associated objects, representing that there may be three kinds of relationships. For example, A and/or B may represent three conditions: i.e., independent existence of A, existence of both A and B and independent existence of B. In addition, the character "/" herein usually represents that the previous and next associated objects are in an "or" relationship.

It is to be understood that the specification is related to a first communication device and a second communication device. The first communication device may be a terminal device, such as a mobile phone, a machine facility, Customer Premise Equipment (CPE), an industrial device, a vehicle, or the like. The second communication device may be the opposite communication device of the first communication device, such as a network device, a mobile phone, an industrial device, a vehicle, or the like. In the embodiments of the disclosure, the first communication device may be a terminal device, and the second communication device may be a network device (i.e., uplink or downlink communication). Alternatively, the first communication device may be a first terminal, and the second communication device may be a second terminal (i.e., sidelink communication).

Terms used in the part of detailed description of the disclosure are used only for explaining specific embodiments of the disclosure, and are not intended to limit the disclosure. Terms "first", "second", "third", "fourth", or the like in the description, the claims and the drawings of the disclosure are used to distinguish different objects rather than to describe a particular order. Furthermore, terms "include" and "have", and any variations thereof, are intended to cover non-exclusive inclusion.

It is to be understood that the "indication" mentioned in the embodiments of the disclosure may be a direct indication, an indirect indication, or may represent an association relationship. For example, A indicating B may represent that A directly indicates B, e.g., B may be obtained through A; or that A indirectly indicates B, e.g., A indicates C, and B may be obtained through C; or that there is an association relationship between A and B.

In the description of the embodiments of the disclosure, the term "corresponding to" may represent that there is a direct correspondence relationship or an indirect correspondence relationship between two elements; or that there is an association relationship between the two elements; or a relationship in which one element indicates or is indicated by the other element, or one element configures or is configured by the other element, or the like.

In the embodiments of the disclosure, "pre-defined" or "pre-configured" may be implemented by pre-storing corresponding codes or tables in a device (e.g., including a terminal device and a network device), or other manners that may be used to indicate related information, the specific implementations of which are not limited by the disclosure. For example, the "pre-defined" may refer to what is defined in a protocol.

In the embodiments of the disclosure, the "protocol" may refer to a standard protocol in the field of communication, such as an evolution of the existing LTE protocol, NR protocol, Wi-Fi protocol, or a related protocol related to other communication systems. The type of the protocol is not limited by the disclosure.

In order to facilitate a better understanding of the embodiments of the disclosure, terminal power saving based on the wake up receiver, which is related to the disclosure, is illustrated.

For further power saving of the terminal device (UE), a Wake up receiver is introduced to receive a wake up signal (WUS). The wake up receiver has characteristics of extremely low cost, extremely low complexity and extremely low power consumption. It mainly receives the WUS by a manner based on envelope detection. Therefore, the modulation mode and waveform of the WUS received by the wake up receiver are different from those of the signal carried based on the Physical Downlink Control Channel (PDCCH). The wake up signal is mainly an envelope signal produced by performing Amplitude Shift Keying (ASK) modulation on the carrier signal. Demodulation of the envelope signal is also mainly completed based on power provided by a radio frequency signal driving a low-power circuit, so it may be passive. The wake up receiver may also be powered by the terminal. No matter which power supply manner, compared to the conventional receiver of the UE, the wake up receiver greatly reduces the power consumption. The wake up receiver may be combined with the UE as an additional module of the UE receiver, or it may be used as a separate wake up functional module of the UE.

Specifically, for example, a system block diagram of a receiver based on zero-power wake up may be shown in FIG. 2. The wake up receiver receives the wake up signal. The UE may be instructed to turn on the main receiver if UE is required to turn on the main receiver. Otherwise, the main receiver of the UE may be in a turned-off or powered-off state. It is to be noted that the wake up receiver may also be referred to as a zero-power receiver or a low-power receiver, and the main receiver may also be referred to as a main transceiver, which is not limited by the embodiments of the disclosure.

In order to facilitate a better understanding of the embodiments of the disclosure, the wake up signal in WiFi communication related to the disclosure is illustrated.

In the WiFi communication, a wake-up radio (WUR) signal is used to implement power saving of the device. A WUR Access point (AP) notifies power saving operations of a WUR station (STA) through a wake-up frame. The wake-up frame is carried in a WUR physical layer protocol data unit (PPDU) frame. A WUR PPDU frame includes three parts, i.e., a legacy preamble, WUR-Sync and WUR-Data. The legacy preamble is used to protect the WUR-Sync and WUR-Data parts, and is a non-WUR part retained for compatibility reasons, which uses conventional Orthogonal frequency-division multiplexing (OFDM) modulation and a bandwidth of 20MHz. The WUR-Sync is used to help identify and demodulate the WUR-Data part. The WUR-Data part is used to carry a WUR physical layer service data unit (PSDU), as shown in FIG. 3.

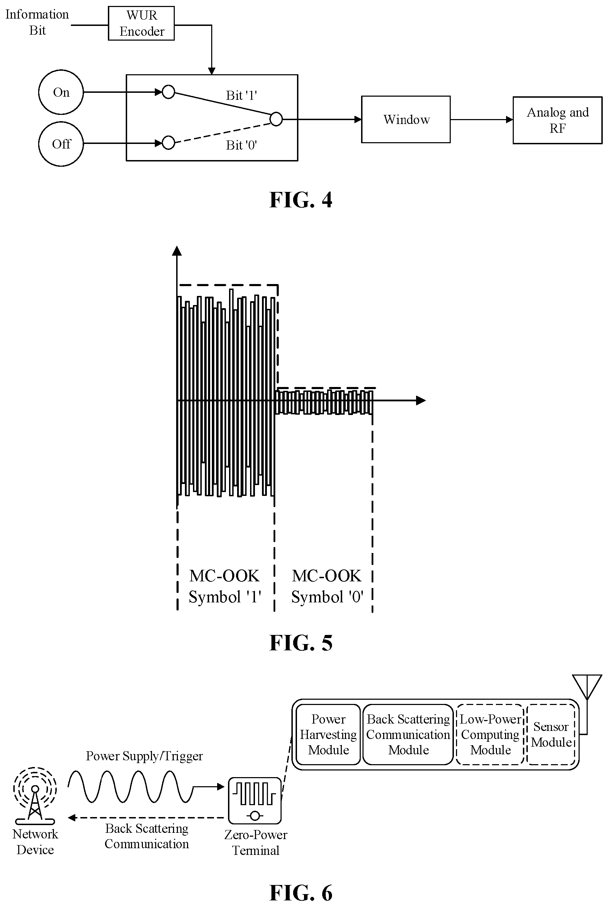

The WUR-Sync part and WUR-Data part adopt On-Off Keying (OOK) modulation and 4MHz. The modulation principle of the OOK is to modulate the amplitude of the carrier signal to non-zero values and zero values, which correspond to On and Off respectively and are used to represent information bits. OOK is also referred to as binary amplitude keying (2ASK). As shown in FIG. 4, the WUR-Sync part carries a synchronization sequence that is repeated twice. Bit 1 in the sequence is modulated as On, and bit 0 is modulated as Off.

It is to be noted that the above OOK signal is generated by Multi-carrier (MC), and thus it is referred to as an MC-OOK signal. The MC-OOK signal may be generated by multi-carrier modulation, for example, the OFDM modulation generates the OOK signal, which may maintain a good compatibility with an OFDM system and reduce transmitter complexity introduced by implementing the WUR signal. FIG. 5 is a schematic diagram of an MC-OOK signal generated by the multi-carrier modulation. By mapping corresponding amplitude values to multiple subcarriers in the frequency domain, a waveform transferred to a time-domain signal by the Inverse Discrete Fourier Transform (IDFT) is approximately a waveform formed by the ASK modulation. Here, bit 1 is represented by a high level of the signal, and bit 0 is represented by a low level of the signal.

In order to facilitate a better understanding of the embodiments of the disclosure, the zero-power device related to the disclosure is illustrated.

In recent years, the zero-power device has been used more and more widely. A typical zero-power device is Radio Frequency Identification (RFID), which is a technology achieving contactless tag information automatic transmission and identification by spatial coupling of radio frequency signals. An RFID tag is also referred to as a "radio frequency tag" or an "electronic tag". According to the power supply mode, types of electronic tags may be divided into active electronic tags, passive electronic tags and semi-passive electronic tags. The active electronic tag means that power of operation of the electronic tag is provided by the battery, and the battery, the memory and the antenna constitute the active electronic tag together. Different from the passive RF activation mode, information is sent through the set frequency band before the battery is replaced. The passive electronic tag does not support built-in batteries. When a passive electronic tag approaches a reader/writer, the tag is located in the range of the near field formed by radiation of the antenna of the reader/writer, the antenna of the electronic tag generates an induced current through electromagnetic induction, and the induced current drives a chip circuit of the electronic tag. The chip circuit sends identification information stored in the tag to the reader/writer through the antenna of the electronic tag. The semi-active electronic tag inherits the advantages of the passive electronic tag, i.e., a small size, a light weight, a low price and a long service life. When there is no access from the reader/writer, the built-in battery supplies power for only a few circuits in the chip. Only when there is an access from the reader/writer, the built-in battery supplies power to the RFID chip, so as to increase the read and write distance of the tag and improve reliability of the communication.

The RFID is a wireless communication technology. The most basic RFID system consists of two parts, i.e., an electronic TAG and a Reader/Writer. The electronic tag consists of coupled components and a chip, and each electronic tag has a unique electronic code which is placed on the to-be-measured target for the purpose of marking the target object. The reader/writer may not only read the information on the electronic tag, but also write the information on the electronic tag, and may further provide power needed for communication for the electronic tag. As shown in FIG. 6, after entering the electromagnetic field, the electronic tag receives the radio frequency signal from the reader/writer. The passive electronic tag transmits the information stored in the electronic tag using power obtained from the electromagnetic field generated in the space. The reader/writer reads and decodes the information to identify the electronic tag.

Key technologies of zero-power communication include power harvesting, back scattering communication, and low-power computing. As shown in FIG. 6, a typical zero-power communication system includes a reader/writer and a zero-power terminal. The reader/writer emits radio waves to provide power for the zero-power terminal. A power harvesting module installed in the zero-power terminal may harvest power carried by radio waves in the space (FIG. 6 shows the radio waves emitted by the reader/writer), which is used to drive a low-power computing module of the zero-power terminal and implement the back scattering communication. After obtaining the power, the zero-power terminal may receive a control command of the reader/writer, and send data to the reader/writer based on the control signaling in a back scattering manner. The data sent may come from data stored in the zero-power terminal itself (such as identification or pre-written information, such as the date of manufacture, brand, manufacturer, or the like, of the product). The zero-power terminal may also load various sensors to report, based on the zero-power mechanism, data harvested by various sensors.

In order to facilitate a better understanding of the embodiments of the disclosure, the Back Scattering communication related to the disclosure is illustrated.

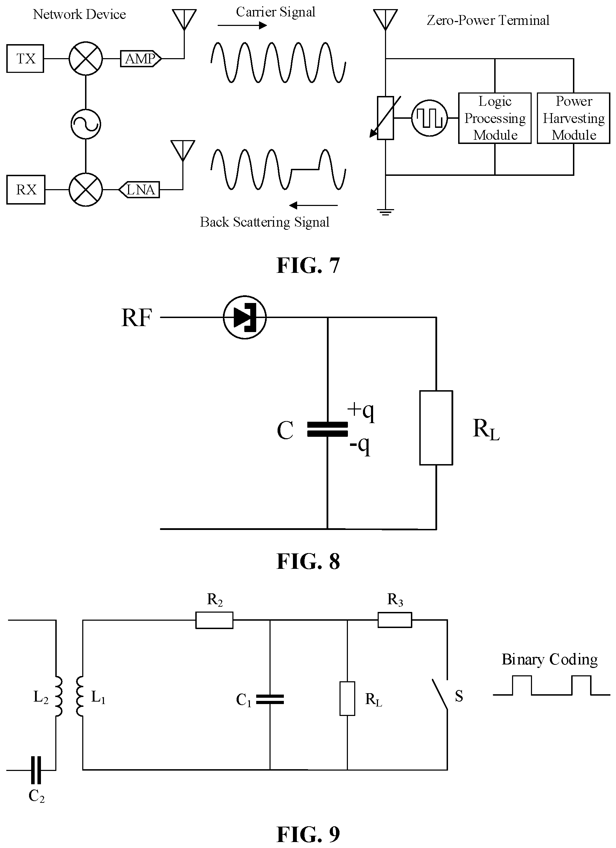

As shown in FIG. 7, the zero-power device (the back scattering tag in FIG. 7) receives a carrier signal from a back scattering reader/writer and harvests power through a Radio Frequency (RF) power harvesting module. Then, the zero-power device supplies power to a low-power processing module (the logic processing module in FIG. 7), modulates incoming wave signals, and performs back scattering.

Main features of the back scattering communication are as follows.

(1) The terminal does not actively transmit signals, and implements the back scattering communication by modulating incoming wave signals.
(2) The terminal does not rely on conventional active power amplifier transmitters, and uses a low-power computing unit to greatly reduce hardware complexity.
(3) Battery-free communication may be implemented in combination with power harvesting.

To facilitate a better understanding of the embodiments of the disclosure, RF Power Harvesting related to the disclosure is illustrated.

As shown in FIG. 8, an RF module is used to implement harvesting of electromagnetic wave power in the space through electromagnetic induction, and then driving of a load circuit (low-power computing, a sensor, or the like) is implemented, which may implement battery-free.

In order to facilitate a better understanding of the embodiments of the disclosure, load modulation related to the disclosure is illustrated.

The load modulation is a method often used by the electronic tag to transmit data to the reader/writer. The load modulation adjusts electrical parameters of the oscillating loop of the electronic tag according to the beat of the data stream, such that the magnitude and phase of the impedance of the electronic tag are changed accordingly, and thereby the modulation process is completed. The load modulation technology has two main manners, i.e., resistor load modulation and capacitor load modulation. In the resistor load modulation, the load is connected in parallel to a resistor which is referred to as a load modulation resistor, and the resistor is connected and disconnected according to the clock of the data stream. The switch S is controlled to be switched on and off by binary data coding. A schematic diagram of a circuit of the resistor load modulation is shown in FIG. 9.

In the capacitor load modulation, the load is connected in parallel to a capacitor, which replaces the load modulation resistor controlled by binary data coding in FIG. 9.

In order to facilitate a better understanding of the embodiments of the disclosure, coding technology related to the disclosure is illustrated.

Data transmitted by the electronic tag may represent the binary "1" and "0" in different forms of codes. A radio frequency identification system generally uses one of the following coding methods: reverse non-return-to-zero (NRZ) coding, Manchester coding, Unipolar RZ coding, differential bi-phase (DBP) coding, Miller coding, or differential coding. Prosaically, 0 and 1 are represented by different pulse signals.

In order to facilitate a better understanding of the embodiments of the disclosure, the power supply signal in the zero-power communication system related to the disclosure is illustrated.

From the perspective of the carrier of the power supply signal, the carrier may be a base station, a smart phone, a smart gateway, a charging station, a micro base station, or the like.

From the perspective of the frequency band, the radio wave for power supply may be low-frequency, medium-frequency, high-frequency, or the like.

From the perspective of the waveform, the radio wave for power supply may be a sine wave, a square wave, a triangle wave, a pulse, a rectangular wave, or the like. In addition, the radio wave for power supply may be a continuous wave or a non-continuous wave (i.e., a certain break time is allowed).

The power supply signal may be one of the signals specified in the 3rd Generation Partnership Project (3GPP) standard, for example, a Sounding Reference Signal (SRS), a Physical Uplink Shared Channel (PUSCH), a Physical Random Access Channel (PRACH), a Physical Uplink Control Channel (PUCCH), a Physical Downlink Control Channel (PDCCH), a Physical Downlink Shared Channel (PDSCH), a Physical Broadcast Channel (PBCH), or the like.

In order to facilitate a better understanding of the embodiments of the disclosure, the trigger signal in the zero-power communication system related to the disclosure is illustrated.

From the perspective of the carrier of the trigger signal, the carrier may be a base station, a smart phone, a smart gateway, or the like.

From the perspective of the frequency band, the radio wave for triggering may be low-frequency, medium-frequency, high-frequency, or the like.

From the perspective of the waveform, the radio wave for triggering may be a sine wave, a square wave, a triangular wave, a pulse, a rectangular wave, or the like. In addition, the radio wave for triggering may be a continuous wave or a non-continuous wave (i.e., a certain time break is allowed).

The trigger signal may be one of the signals specified in the 3GPP standard, such as an SRS, a PUSCH, a PRACH, a PUCCH, a PDCCH, a PDSCH, a PBCH, or the like; or may be a new signal.

In order to facilitate a better understanding of the embodiments of the disclosure, a cellular passive IoT related to the disclosure is illustrated.

With the increase of 5G industry applications, types and application scenarios of connected things are getting more and more, and there will be higher requirements for the price and power consumption of the communication terminal. The application of battery-free and low-cost passive IoT devices has become the key technology of the cellular IoT, which enriches the types and number of 5G network link terminals, and truly implements Internet of everything. Here, a passive IoT device may be based on the existing zero-power device, such as the RFID technology, and extend on such basis to apply to the cellular IoT.

In order to facilitate a better understanding of the embodiments of the disclosure, the problem solved by the disclosure is illustrated.

The receiver having extremely low power consumption and complexity is used to save power or reduce the complexity and cost of the terminal, such as the Wake up Radio (WUR) in the WiFi technology and the wake up receiver in the NR technology, as well as the future zero-power communication. In order to be compatible with the existing system and make full use of resources, taking the NR system as an example, when the wake up receiver adopted by the terminal receives the wake up signal (WUS), the WUS signal sent from the network device is expected to be compatible with the existing Orthogonal frequency-division multiplexing (OFDM) transmitter, and is expected to be multiplexed within the frequency band with existing NR signals, rather than using a separate frequency band resource for transmitting the WUS signal. The WUS signal is generally received in a manner of envelope detection, which requires a sufficient power difference between high and low levels to correctly demodulate the high and low levels. In the NR system, when the WUS is multiplexed with other NR signals, how to send the WUS signal to meet the requirements of envelope detection is a problem that needs to be solved.

Based on the above problem, the disclosure proposes a signal transmission solution. By optimizing the modulation mode and/or constellation point associated with the subcarrier carrying high-level and low-level signals in the target signal, the modulation depth between the high-level and low-level signals in the target signal may meet the demodulation requirements, which improves the detection performance of the target signal.

In order to facilitate the understanding of the technical solution of the embodiments of the disclosure, the technical solution of the disclosure is described in detail through specific embodiments. The following related technologies, as optional solutions, may be arbitrarily combined with the technical solution of the embodiments of the disclosure, all of which fall within the scope of protection of the embodiments of the disclosure. The embodiments of the disclosure include at least some of the following.

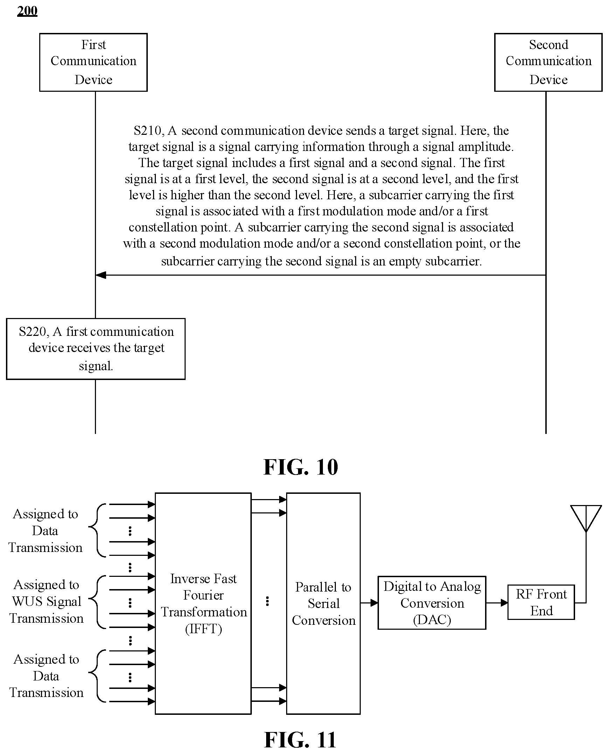

FIG. 10 is a schematic flowchart of a wireless communication method 200 according to an embodiment of the disclosure. As shown in FIG. 10, the wireless communication method 200 may include at least part of the following.

In operation S210, a second communication device sends a target signal. Here, the target signal is a signal carrying information through a signal amplitude. The target signal includes a first signal and a second signal. The first signal is at a first level, the second signal is at a second level, and the first level is higher than the second level. Here, a subcarrier carrying the first signal is associated with a first modulation mode and/or a first constellation point. A subcarrier carrying the second signal is associated with a second modulation mode and/or a second constellation point, or the subcarrier carrying the second signal is an empty subcarrier.

In operation S220, a first communication device receives the target signal.

In the embodiments of the disclosure, by optimizing the modulation mode and/or constellation point associated with the subcarrier carrying high-level and low-level signals in the target signal, the modulation depth between the high-level and low-level signals in the target signal may meet the demodulation requirements, which improves the detection performance of the target signal.

In the embodiments of the disclosure, the first signal may be the high-level part of the target signal, and the amplitude value of the first signal may be a specific value or a value within a value range. The second signal may be the low-level part of the target signal, and the amplitude value of the second signal may be a specific value or a value within a value range.

In some embodiments, the difference between the amplitude of the first signal and the amplitude of the second signal is greater than a first threshold, and/or the ratio of the amplitude of the first signal to the amplitude of the second signal is greater than a second threshold, such that the modulation depth between the high-level and low-level signals in the target signal meets the demodulation requirements.

In some embodiments, the first threshold is specified by a protocol, or the first threshold is configured by a network device.

In some embodiments, the second threshold is specified by the protocol, or the second threshold is configured by the network device.

In some embodiments, the first communication device is a terminal device or a network device. Here, the first communication device includes a special receiver, such as a wake up receiver or a low-power receiver, which may demodulate the target signal.

In some embodiments, the first communication device may be a zero-power device, and the first communication device may demodulate the target signal. Optionally, the first communication device may obtain power through power harvesting for communication, information harvesting and processing. That is, before the second communication device communicates with the first communication device, it is necessary to ensure that the first communication device receives a radio wave for wireless power supply and obtains wireless power through power harvesting. That is to say, the embodiments of the disclosure may be applied to zero-power communication technology. Optionally, the target signal may be a power supply signal of the first communication device.

It is to be understood that the disclosure does not limit the specific manner in which the first communication device obtains power through power harvesting. As an example rather than a limitation, the first communication device may obtain power in wireless power supply manners such as a radio frequency signal, solar power, pressure, temperature, or the like.

It is to be noted that the zero-power device is a general name for a device having extremely low complexity and extremely low power consumption. Such kind of device may not rely on batteries, and power required for its operation comes from the environment. Such kind of device may have a capability of power collection and storage. Communication of the zero-power device may support simple modulation and demodulation manners, such as Amplitude Shift Keying (ASK), Frequency Shift Keying (FSK), or the like. Specifically, the zero-power device may refer to an Ambient Power Enabled (AMP) device introduced into The 3rd Generation Partnership Project (3GPP) and WiFi technology, and may also be a communication module of an existing device, such as the WUR functional module introduced into the WiFi technology and the Wake up receiver of the terminal device introduced into the 3GPP.

Specifically, power of the AMP device comes from the environment. According to different types of AMP devices, some AMP devices may have active emission capabilities rather than only relying on back scattering.

In some embodiments, the second communication device is a device for communicating with the first communication device. Optionally, the second communication device may be a network device, or the second communication device may be a terminal device, or the second communication device may be a power supply node.

In some embodiments, the target signal is a signal generated based on multi-carrier modulation.

In some embodiments, the target signal may also be a signal received in a manner of envelope detection. That is, in the embodiments of the disclosure, the target signal is a signal carrying information through the signal amplitude, or the target signal is a signal received in the manner of envelope detection.

In some embodiments, the target signal is a WUS signal, and of course, the target signal may be another signal or a signal for transmitting data, which is not limited by the embodiments of the disclosure. Optionally, the WUS signal is an On-Off Keying (OOK) signal or a Multi-carrier On-Off Keying (MC-OOK) signal. Specifically, for example, for an IoT device having extremely low power consumption and complexity in the zero-power communication, such as an AMP IoT device, signals received by such type of device are mainly signals based on ASK modulation, such as OOK signals. Signals received by such type of device are not only WUS signals for waking up, but may also be signals for transmitting user data.

The embodiments of the disclosure are not limited to generation of WUS signals in the NR system, and also apply to generation of WUR signals in other communication systems that use multi-carrier modulation air interface technology, such as a WiFi.

The OOK signal is taken as an example to illustrate the signals received in the manner of envelope detection. There may also be signals generated in a manner of other modulation, such as the ASK and FSK modulation, which essentially need to detect the high and low levels of the signal at the receiving end in the manner of envelope detection for demodulation. Correspondingly, an on signal in the OOK signal corresponds to the high-level signal, and an off signal corresponds to the low-level signal.

In some embodiments, the target signal is a WUS signal, specifically an OOK signal or an MC-OOK signal. Here, the first signal is an on signal, and the second signal is an off signal.

In some embodiments, the receiver that detects the target signal in the manner of envelope detection has low complexity and power consumption. The receiver may demodulate, in the manner of envelope detection, the target signal modulated by the ASK, OOK, or FSK. Taking the MC-OOK signal as an example, by setting certain non-zero amplitude values for multiple subcarriers, a corresponding on time-domain waveform may be generated by IDFT transformation of the transmitter. Without assigning values to the corresponding subcarriers, a corresponding off time-domain waveform may be generated. In this way, OOK modulation based on multi-carrier is implemented. For example, a WUR signal in the WiFi technology uses 13 subcarriers in the center of 64-point IDFT to generate an on waveform within a bandwidth of 20MHz. For a symbol length of $2\mu s$, 6 subcarriers of the 13 subcarriers with subcarrier indexes k = (-6, -4, -2, 2, 4, 6) are assigned with non-zero values, and the other subcarriers are not assigned with any value. For a symbol length of $4\mu s$, 12 subcarriers of the 13 subcarriers with subcarrier indexes k = (-6, -5, ... -1, 1, 2, ... 6) are assigned with non-zero values, and the other subcarrier is not assigned with any value.

In some embodiments, the target signal and the signal in the NR system may be multiplexed within the frequency band. As shown in FIG. 11, the WUS signal and data signal are mapped to different subcarriers, and are processed and transmitted by an OFDM transmitter.

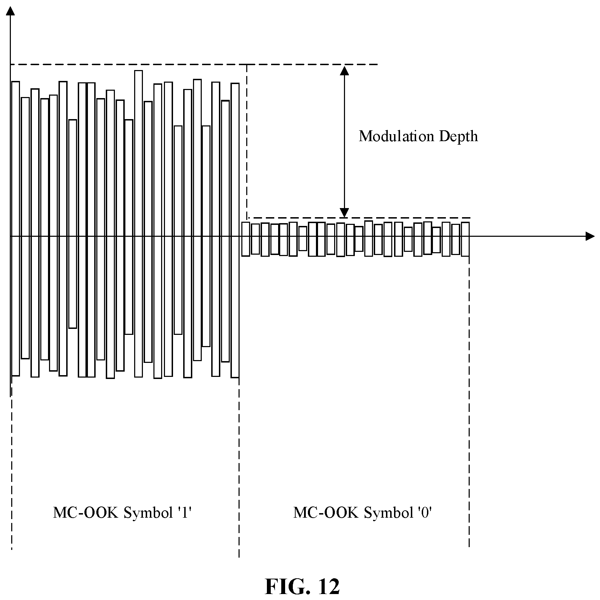

In some embodiments, for the OOK signal generated by multi-carrier, the amplitudes of the on signal and off signal need to reach a certain modulation depth in order to be correctly demodulated at the receiving end, as shown in FIG. 12. For example, for the MC-OOK signal in the WiFi technology, the ratio of the average power of On and Off symbols needs to be at least 20 decibels (dB).

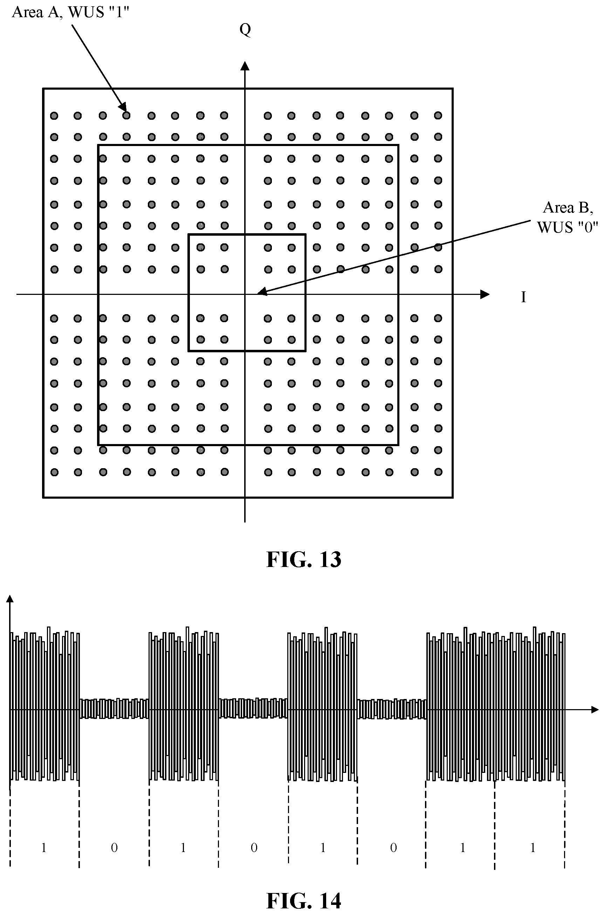

In some embodiments, when the first signal (such as the On signal) is generated, the assignment of the subcarrier carrying the signal needs to meet requirements that the amplitude of the generated time-domain signal meets the requirements of the modulation depth, and the amplitude of the signal within the symbol is as flat as possible. Correspondingly, compared with the symbol of the first signal (such as the On signal), the amplitude of the second signal (such as the Off signal) is as low as possible to meet the requirements of the modulation depth. Taking 256 Quadrature Amplitude Modulation (QAM) as an example, the above requirements are met by mapping different constellation points on the subcarrier. As shown in FIG. 13, a constellation point having a higher amplitude value (i.e., a constellation point within area A) is mapped to the subcarrier to generate the first signal (e.g., On signal, WUS "1"), and a constellation point having a smaller amplitude value (i.e., a constellation point within area B) is mapped to the subcarrier to generate the second signal (e.g., Off signal, WUS "0").

In some embodiments, the second signal (such as the Off signal) may also be implemented by setting the corresponding subcarrier as an empty subcarrier, that is, the subcarrier carrying the second signal (such as the Off signal) is an empty subcarrier. That is, in the symbol where the second signal (such as the Off signal) is located, it is enough that the modulation symbol mapped to the corresponding subcarrier ensures that the time-domain waveform meets the low level, and even no modulation symbol is mapped to these subcarriers carrying the second signal (such as the Off signal).

In some embodiments, the target signal is the WUS signal, and specifically is the MC-OOK signal, which thereby generates an equivalent amplitude modulation signal in the time domain by mapping the modulation symbol to the corresponding subcarrier. Specifically, a first level (i.e., the high level) is used to represent the first signal (such as the on signal), which is used to carry bit 1. A second level (i.e., the low level) is used to represent the second level (such as the off signal), which is used to carry the bit 0, as shown in FIG. 14.

In order to generate the first signal (such as the on signal), the modulation symbol mapping the subcarrier carrying the WUS signal has a higher amplitude value, such as the constellation points in area A of the constellation points modulated by 256QAM in FIG. 13. In order to meet the requirement that the generated time-domain waveform meets a certain amplitude requirement, these constellation points are not freely selected, and are often pre-defined constellation points. However, for the second signal (such as the off signal), as long as the low level is met and the proportion of the amplitude value compared to the high level is met, the low level, i.e., the off signal may be normally detected in the WUR.

In order to meet a certain modulation depth, when the first signal (such as the on signal) is generated, it is necessary to determine which modulation mode and which constellation points are adopted to be mapped to the corresponding subcarrier. Optionally, the modulation mode and/or constellation point adopted by the first signal (such as the on signal) depends on the modulation mode and/or constellation adopted by the second signal (such as the off signal). That is to say, the signal generated by the modulation modes and constellation points adopted by the first signal (such as the on signal) and the second signal (such as the off signal) meet a target modulation depth. Therefore, the modulation modes and constellation points respectively adopted by the first signal (such as the on signal) and the second signal (such as the off signal) may be specified.

Specifically, for example, taking 256QAM as an example, the method of bitmapping modulating symbol is as follows.

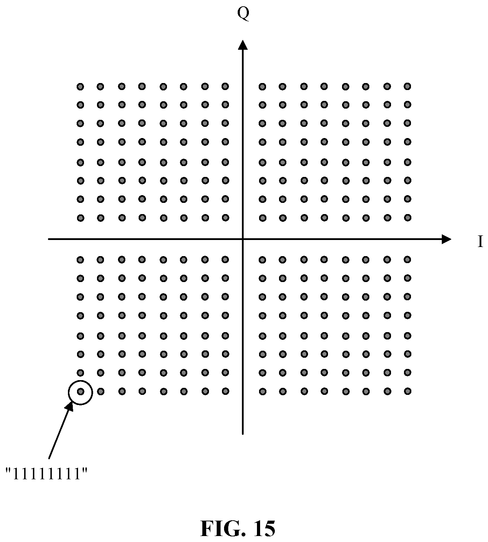

Bits $b(8i), b(8i+1)$, $b(8i+2)$, $b(8i+3)$, $b(8i+4), b(8i+5)$, $b(8i+6)$, $b(8i+7)$ are mapped to modulation symbols of complex values according to the following formula 1. The constellation point (1,1,1,1,1,1,1) has a higher amplitude value, as shown in FIG. 15.

$$d(i) = \frac{1}{\sqrt{170}} \Big\{ \big(1 - 2b(8i)\big)\Big[ 8 - \big(1 - 2b(8i+2)\big)\Big[ 4 - \big(1 - 2b(8i+4)\big)\Big[ 2 - \big(1 - 2b(8i+6)\big)\Big]\Big]\Big]$$
$$+ j\big(1 - 2b(8i+1)\big)\Big[ 8 - \big(1 - 2b(8i+3)\big)\Big[ 4 - \big(1 - 2b(8i+5)\big)\Big[ 2 - \big(1 - 2b(8i+7)\big)\Big]\Big]\Big]\Big\} \qquad \text{formula 1}$$

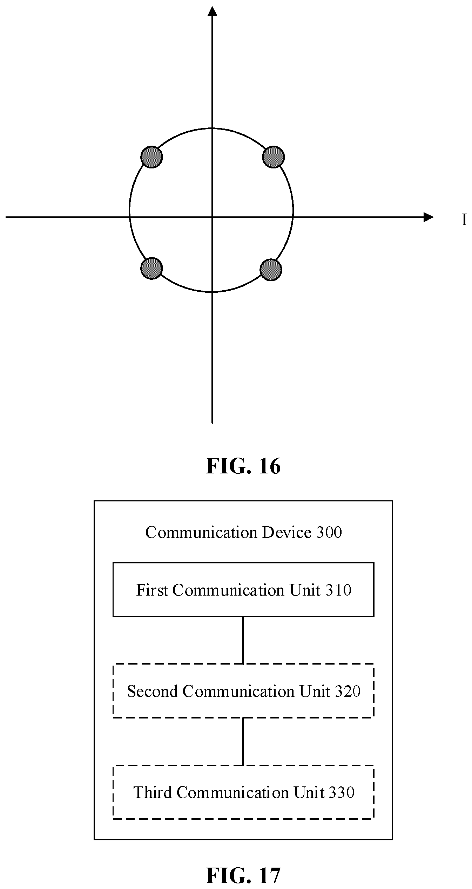

Specifically, in another example, taking Quadrature Phase Shift Keying (QPSK) as an example, bits $b(2i), b(2i+1)$ are mapped to modulation symbols of complex values according to the following formula 2. The constellation point of QPSK has a constant amplitude and the amplitude value is small, as shown in FIG. 16.

$$d(i) = \frac{1}{\sqrt{2}} \Big[ \big(1 - 2b(2i)\big) + j\big(1 - 2b(2i+1)\big) \Big] \qquad \text{formula 2}$$

In some embodiments, the first modulation mode and/or the first constellation point are/is determined based on the second modulation mode and/or the second constellation point. That is, the modulation mode and/or constellation point adopted by the first signal (such as the on signal) depends on the modulation mode and/or constellation point adopted by the second signal (such as the off signal).

In some embodiments, the first modulation mode and/or the first constellation point are/is specified by the protocol, or the first modulation mode and/or the first constellation point are/is configured or indicated by the network device. For example, the first modulation mode and/or the first constellation point are/is semi-statically configured or indicated by the network device, or the first modulation mode and/or the first constellation point are/is dynamically configured or indicated by the network device.

In some embodiments, the second modulation mode and/or the second constellation point are/is specified by the protocol, or the second modulation mode and/or the second constellation point are/is configured or indicated by the network device. For example, the second modulation mode and/or the second constellation point are/is semi-statically configured or indicated by the network device, or the second modulation mode and/or the second constellation point are/is dynamically configured or indicated by the network device.

In some embodiments, the first communication device receives first information.

Here, the first information is used to configure or indicate at least one first combination. The first combination is a combination of: a modulation mode and a constellation point associated with the subcarrier carrying the first signal, and a modulation mode and a constellation point associated with the subcarrier carrying the second signal.

Specifically, for example, the first communication device receives the first information from the second communication device, or the first communication device receives the first information from a device other than the second communication device.

Specifically, the first communication device acquires the at least one first combination after receiving the first information, and the first communication device may demodulate the target signal based on the at least one first combination.

In some embodiments, the first information is carried by one of:
a Radio Resource Control (RRC) signaling, a Media Access Control Control Element (MAC CE), Downlink Control Information (DCI), a PC5-RRC signaling, or Sidelink Control Information (SCI).

In some embodiments, the combination of: the modulation mode and the constellation point associated with the subcarrier carrying the first signal, and the modulation mode and the constellation point associated with the subcarrier carrying the second signal, is specified by the protocol.

In some embodiments, the first modulation mode belongs to a first modulation mode set, and the second modulation mode belongs to a second modulation mode set. Here, a modulation mode in the first modulation mode set is specified by the protocol, or the modulation mode in the first modulation mode set is configured or indicated by the network device; and/or a modulation mode in the second modulation mode set is specified by the protocol, or the modulation mode in the second modulation mode set is configured or indicated by the network device.

In some embodiments, the first constellation point belongs to a first constellation point set, and the second constellation point belongs to a second constellation point set. Here, a constellation point in the first constellation point set is specified by the protocol, or the constellation point in the first constellation point set is configured or indicated by the network device; and/or a constellation point in the second constellation point set is specified by the protocol, or the constellation point in the second constellation point set is configured or indicated by the network device.

In some embodiments, the combination of modulation modes and constellation points respectively adopted by the first signal (such as the on signal) and the second signal (such as the off signal) may include at least one of:

(256 QAM, constellation point "11111111") and (QPSK, constellation point "11" or any constellation point);
(1024 QAM, constellation point "1111111111") and (QPSK, constellation point "11" or any constellation point);
(256 QAM, constellation point "11111111") and (Binary Phase Shift Keying (BPSK), constellation point "1" or any constellation point);
(64 QAM, constellation point "111111") and (BPSK, constellation point "1" or any constellation point);
(64 QAM, constellation point "111111") and (QPSK, constellation point "11" or any constellation point); or
(1024 QAM, constellation point "1111111111") and (16 QAM, constellation point "1111").

In some embodiments, a time-frequency resource, on which the second signal is located, is allowed to carry first target information.

In some embodiments, the first target information includes at least one of: a Physical Downlink Shared Channel (PDSCH), a Physical Downlink Control Channel (PDCCH), a Physical Sidelink Shared Channel (PSSCH), a Physical Sidelink Control Channel (PSCCH), a Physical Uplink Shared Channel (PUSCH), a Physical Uplink Control Channel (PUCCH), a Channel State Information Reference Signal (CSI-RS), or a Demodulation Reference Signal (DMRS), but is not limited thereto.

In some embodiments, the first modulation mode and/or the first constellation point are/is determined based on a modulation mode adopted by the first target information carried by the time-frequency resource on which the second signal is located.

In some embodiments, the first modulation mode belongs to the first modulation mode set, and the modulation mode adopted by the first target information belongs to a third modulation mode set. Here, the modulation mode in the first modulation mode set is specified by the protocol, or the modulation mode in the first modulation mode set is configured or indicated by the network device; and/or a modulation mode in the third modulation mode set is specified by the protocol, or the modulation mode in the third modulation mode set is configured or indicated by the network device.

Specifically, for example, the modulation mode in the first modulation mode set is semi-statically configured or indicated by the network device, or the modulation mode in the first modulation mode set is dynamically configured or indicated by the network device.

Specifically, for example, the modulation mode in the third modulation mode set is semi-statically configured or indicated by the network device, or the modulation mode in the third modulation mode set is dynamically configured or indicated by the network device.

In some embodiments, for the second signal (such as the off signal), as long as the low level is met and the proportion of the amplitude value compared to the high level is met, the low level, i.e., the second signal (such as the off signal) may be normally detected. Therefore, the time-frequency resource on which the second signal (such as the off signal) is located may carry the first target information that may meet characteristics of the low-level signal, and the time-frequency resource may be fully utilized. In such case, the modulation mode and constellation point adopted by the first signal (such as the on signal) may be determined according to the modulation mode adopted by the first target information. For example, when the modulation mode of the first target information is BPSK or QPSK, the modulation mode adopted by the first signal (such as the on signal) is 256QAM with the corresponding constellation point. In another example, when the modulation mode of the first target information is 16QAM, the modulation mode adopted by the first signal (such as the on signal) is 1024QAM with the corresponding constellation point.

In some embodiments, Power Per Resource Element (EPRE) of the subcarrier carrying the first signal is different from EPRE of the subcarrier carrying the second signal.

Specifically, for example, EPRE of the subcarrier carrying the WUS signal may have a certain power bias with other NR signals, so as to generate the OOK signal that meets a certain modulation depth. Here, the EPRE of the first signal (such as the on signal) is different from the EPRE of the second signal (such as the off signal), the power bias between which meets a certain threshold.

In some embodiments, a power bias between the EPRE of the subcarrier carrying the first signal and second target information is greater than a power bias between the EPRE of the subcarrier carrying the second signal and the second target information.

That is, the EPRE of the first signal (such as the on signal) has a larger power bias than EPRE of the second target information, and the EPRE of the second signal (such as the off signal) has a smaller power bias than the EPRE of the second target information.

In some embodiments, the second target information includes at least one of: a Secondary Synchronization Signal (SSS), a CSI-RS, a DMRS, a PDSCH, a PUSCH, or a PSCCH, but is not limited thereto.

In some embodiments, the EPRE of the subcarrier carrying the first signal is specified by the protocol, or the EPRE of the subcarrier carrying the first signal is configured or indicated by the network device; and/or the EPRE of the subcarrier carrying the second signal is specified by the protocol, or the EPRE of the subcarrier carrying the second signal is configured or indicated by the network device.

In some embodiments, the first communication device receives second information. Here, the second information is used to configure or indicate at least one second combination. The second combination is a combination of: a modulation mode, a constellation point and EPRE associated with the subcarrier carrying the first signal, and a modulation mode, a constellation point and EPRE associated with the subcarrier carrying the second signal.

Specifically, for example, the first communication device receives the second information from the second communication device, or the first communication device receives the second information from a device other than the second communication device.

In some embodiments, the second information is carried by one of: an RRC signaling, an MAC CE, DCI, a PC5-RRC signaling, or SCI.

In some embodiments, the combination of: the modulation mode, the constellation point and the EPRE associated with the subcarrier carrying the first signal, and the modulation mode, the constellation point and the EPRE associated with the subcarrier carrying the second signal, is specified by the protocol.

Therefore, in the embodiments of the disclosure, by optimizing the modulation mode and/or constellation point associated with the subcarrier carrying high-level and low-level signals in the target signal, the modulation depth between the high-level and low-level signals in the target signal may meet the demodulation requirements, which improves the detection performance of the target signal. In other words, the target signal generated by the embodiments of the disclosure may meet the requirements of the modulation depth between high and low levels based on envelope detection, which improves the detection performance of the target signal.

The method embodiments of the disclosure are described above in detail in combination with FIG. 10 to FIG. 16, and apparatus embodiments of the disclosure are described below in detail in combination with FIG. 17 to FIG. 21. It is to be understood that the apparatus embodiments correspond to the method embodiments, and similar description may be referred to the method embodiments.

FIG. 17 shows a schematic block diagram of a communication device 300 according to an embodiment of the disclosure. The communication device 300 is a first communication device. As shown in FIG. 17, the communication device 300 includes a first communication unit 310.

The first communication unit 310 is configured to receive a target signal.

Here, the target signal is a signal carrying information through a signal amplitude. The target signal includes a first signal and a second signal. The first signal is at a first level, the second signal is at a second level, and the first level is higher than the second level.

Here, a subcarrier carrying the first signal is associated with a first modulation mode and/or a first constellation point. A subcarrier carrying the second signal is associated with a second modulation mode and/or a second constellation point, or the subcarrier carrying the second signal is an empty subcarrier.

In some embodiments, the first modulation mode and/or the first constellation point are/is determined based on the second modulation mode and/or the second constellation point.

In some embodiments, the first modulation mode and/or the first constellation point are/is specified by a protocol, or the first modulation mode and/or the first constellation point are/is configured or indicated by a network device; and/or

the second modulation mode and/or the second constellation point are/is specified by the protocol, or the second modulation mode and/or the second constellation point are/is configured or indicated by the network device.

In some embodiments, the communication device 300 further includes a second communication unit 320.

The second communication unit 320 is configured to receive first information.

Here, the first information is used to configure or indicate at least one first combination. The first combination is a combination of: a modulation mode and a constellation point associated with the subcarrier carrying the first signal, and a modulation mode and a constellation point associated with the subcarrier carrying the second signal.

In some embodiments, the first information is carried by one of:
an RRC signaling, an MAC CE, DCI, a PC5-RRC signaling, or SCI.

In some embodiments, the combination of: the modulation mode and the constellation point associated with the subcarrier carrying the first signal, and the modulation mode and the constellation point associated with the subcarrier carrying the second signal, is specified by the protocol.

In some embodiments, the first modulation mode belongs to a first modulation mode set, and the second modulation mode belongs to a second modulation mode set.

Here, a modulation mode in the first modulation mode set is specified by the protocol, or the modulation mode in the first modulation mode set is configured or indicated by the network device; and/or a modulation mode in the second modulation mode set is specified by the protocol, or the modulation mode in the second modulation mode set is configured or indicated by the network device.

In some embodiments, the first constellation point belongs to a first constellation point set, and the second constellation point belongs to a second constellation point set.

Here, a constellation point in the first constellation point set is specified by the protocol, or the constellation point in the first constellation point set is configured or indicated by the network device; and/or a constellation point in the second constellation point set is specified by the protocol, or the constellation point in the second constellation point set is configured or indicated by the network device.

In some embodiments, a time-frequency resource, on which the second signal is located, is allowed to carry first target information.

In some embodiments, the first modulation mode and/or the first constellation point are/is determined based on a modulation mode adopted by the first target information carried by the time-frequency resource on which the second signal is located.

In some embodiments, the first modulation mode belongs to the first modulation mode set, and the modulation mode adopted by the first target information belongs to a third modulation mode set.

Here, the modulation mode in the first modulation mode set is specified by the protocol, or the modulation mode in the first modulation mode set is configured or indicated by the network device; and/or a modulation mode in the third modulation mode set is specified by the protocol, or the modulation mode in the third modulation mode set is configured or indicated by the network device.

In some embodiments, the first target information includes at least one of: a PDSCH, a PDCCH, a PSSCH, a PSCCH, a PUSCH, a PUCCH, a CSI-RS, or a DMRS.

In some embodiments, EPRE of the subcarrier carrying the first signal is different from EPRE of the subcarrier carrying the second signal.

In some embodiments, a power bias between the EPRE of the subcarrier carrying the first signal and second target information is greater than a power bias between the EPRE of the subcarrier carrying the second signal and the second target information.

In some embodiments, the second target information includes at least one of: an SSS, a CSI-RS, a DMRS, a PDSCH, a PUSCH, or a PSCCH.

In some embodiments, the EPRE of the subcarrier carrying the first signal is specified by the protocol, or the EPRE of the subcarrier carrying the first signal is configured or indicated by the network device; and/or

the EPRE of the subcarrier carrying the second signal is specified by the protocol, or the EPRE of the subcarrier carrying the second signal is configured or indicated by the network device.

In some embodiments, the communication device 300 further includes a third communication unit 330.

The third communication unit 330 is configured to receive second information.

Here, the second information is used to configure or indicate at least one second combination. The second combination is a combination of: a modulation mode, a constellation point and EPRE associated with the subcarrier carrying the first signal, and a modulation mode, a constellation point and EPRE associated with the subcarrier carrying the second signal.

In some embodiments, the second information is carried by one of: an RRC signaling, an MAC CE, DCI, a PC5-RRC signaling, or SCI.

In some embodiments, the combination of: the modulation mode, the constellation point and the EPRE associated with the subcarrier carrying the first signal, and the modulation mode, the constellation point and the EPRE associated with the subcarrier carrying the second signal, is specified by the protocol.

In some embodiments, the target signal is a WUS.

In some embodiments, the above communication unit may be a communication interface or a transceiver, or an input/output interface of a communication chip or a system-on-chip. The above processing unit may be one or more processors.

It is to be understood that the communication device 300 according to the embodiments of the disclosure may correspond to the first communication device in the method embodiments of the disclosure, and the above and other operations and/or functions of the various units in the communication device 300 are respectively for the purpose of implementing corresponding flows of the first communication device in the method 200 shown in FIG. 10, which is not repeated here for the sake of brevity.

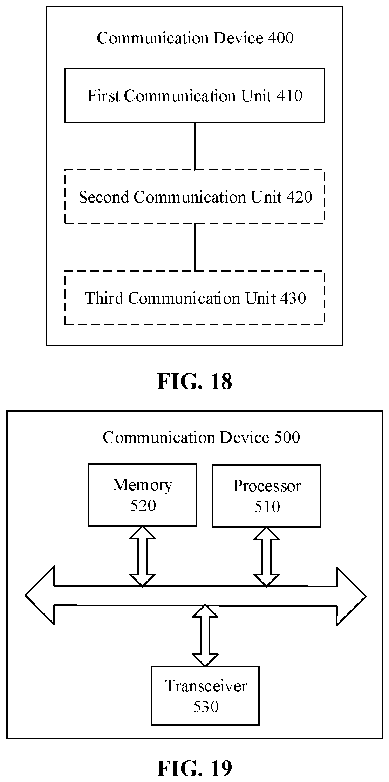

FIG. 18 shows a schematic block diagram of a communication device 400 according to an embodiment of the disclosure. The communication device 300 is a second communication device. As shown in FIG. 18, the communication device 400 includes a first communication unit 410.

The first communication unit 410 is configured to send a target signal.

Here, the target signal is a signal carrying information through a signal amplitude. The target signal includes a first signal and a second signal. The first signal is at a first level, the second signal is at a second level, and the first level is higher than the second level.

Here, a subcarrier carrying the first signal is associated with a first modulation mode and/or a first constellation point. A subcarrier carrying the second signal is associated with a second modulation mode and/or a second constellation point, or the subcarrier carrying the second signal is an empty subcarrier.

In some embodiments, the first modulation mode and/or the first constellation point are/is determined based on the second modulation mode and/or the second constellation point.

In some embodiments, the first modulation mode and/or the first constellation point are/is specified by a protocol, or the first modulation mode and/or the first constellation point are/is configured or indicated by a network device; and/or the second modulation mode and/or the second constellation point are/is specified by the protocol, or the second modulation mode and/or the second constellation point are/is configured or indicated by the network device.

In some embodiments, the communication device 400 further includes a second communication unit 420.

The second communication unit 420 is configured to send first information.

Here, the first information is used to configure or indicate at least one first combination. The first combination is a combination of: a modulation mode and a constellation point associated with the subcarrier carrying the first signal, and a modulation mode and a constellation point associated with the subcarrier carrying the second signal.

In some embodiments, the first information is carried by one of:

an RRC signaling, an MAC CE, DCI, a PC5-RRC signaling, or SCI.

In some embodiments, the combination of: the modulation mode and the constellation point associated with the subcarrier carrying the first signal, and the modulation mode and the constellation point associated with the subcarrier carrying the second signal, is specified by the protocol.

In some embodiments, the first modulation mode belongs to a first modulation mode set, and the second modulation mode belongs to a second modulation mode set.

Here, a modulation mode in the first modulation mode set is specified by the protocol, or the modulation mode in the first modulation mode set is configured or indicated by the network device; and/or a modulation mode in the second modulation mode set is specified by the protocol, or the modulation mode in the second modulation mode set is configured or indicated by the network device.

In some embodiments, the first constellation point belongs to a first constellation point set, and the second constellation point belongs to a second constellation point set.

Here, a constellation point in the first constellation point set is specified by the protocol, or the constellation point in the first constellation point set is configured or indicated by the network device; and/or a constellation point in the second constellation point set is specified by the protocol, or the constellation point in the second constellation point set is configured or indicated by the network device.

In some embodiments, a time-frequency resource, on which the second signal is located, is allowed to carry first target information.

In some embodiments, the first modulation mode and/or the first constellation point are/is determined based on a modulation mode adopted by the first target information carried by the time-frequency resource on which the second signal is located.

In some embodiments, the first modulation mode belongs to the first modulation mode set, and the modulation mode adopted by the first target information belongs to a third modulation mode set.

Here, the modulation mode in the first modulation mode set is specified by the protocol, or the modulation mode in the first modulation mode set is configured or indicated by the network device; and/or a modulation mode in the third modulation mode set is specified by the protocol, or the modulation mode in the third modulation mode set is configured or indicated by the network device.

In some embodiments, the first target information includes at least one of: a PDSCH, a PDCCH, a PSSCH, a PSCCH, a PUSCH, a PUCCH, a CSI-RS, or a DMRS.

In some embodiments, EPRE of the subcarrier carrying the first signal is different from EPRE of the subcarrier carrying the second signal.

In some embodiments, a power bias between the EPRE of the subcarrier carrying the first signal and second target information is greater than a power bias between the EPRE of the subcarrier carrying the second signal and the second target information.

In some embodiments, the second target information includes at least one of: an SSS, a CSI-RS, a DMRS, a PDSCH, a PUSCH, or a PSCCH.

In some embodiments, the EPRE of the subcarrier carrying the first signal is specified by the protocol, or the EPRE of the subcarrier carrying the first signal is configured or indicated by the network device; and/or

the EPRE of the subcarrier carrying the second signal is specified by the protocol, or the EPRE of the subcarrier carrying the second signal is configured or indicated by the network device.

In some embodiments, the communication device 400 further includes a third communication unit 430.

The third communication unit 430 is configured to send second information.

Here, the second information is used to configure or indicate at least one second combination. The second combination is a combination of: a modulation mode, a constellation point and EPRE associated with the subcarrier carrying the first signal, and a modulation mode, a constellation point and EPRE associated with the subcarrier carrying the second signal.

In some embodiments, the second information is carried by one of: an RRC signaling, an MAC CE, DCI, a PC5-RRC signaling, or SCI.

In some embodiments, the combination of: the modulation mode, the constellation point and the EPRE associated with the subcarrier carrying the first signal, and the modulation mode, the constellation point and the EPRE associated with the subcarrier carrying the second signal, is specified by the protocol.

In some embodiments, the target signal is a WUS.

In some embodiments, the above communication unit may be a communication interface or a transceiver, or an input/output interface of a communication chip or a system-on-chip. The above processing unit may be one or more processors.

It is to be understood that the communication device 400 according to the embodiments of the disclosure may correspond to the second communication device in the method embodiments of the disclosure, and the above and other operations and/or functions of the various units in the communication device 400 are respectively for the purpose of implementing corresponding flows of the second communication device in the method 200 shown in FIG. 10, which is not repeated here for the sake of brevity.

FIG. 19 is a schematic diagram of a structure of a communication device 500 provided by an embodiment of the disclosure. The communication device 500 shown in FIG. 19 includes a processor 510, and the processor 510 may call and run a computer program in a memory to implement the method in the embodiments of the disclosure.

In some embodiments, as shown in FIG. 19, the communication device 500 may further include a memory 520. The processor 510 may call and run a computer program in the memory 520 to implement the method in the embodiments of the disclosure.

The memory 520 may be a separate component independent of the processor 510, or may be integrated in the processor 510.

In some embodiments, as shown in FIG. 19, the communication device 500 may further include a transceiver 530. The processor 510 may control the transceiver 530 to communicate with other devices, specifically, to send information or data to other devices, or to receive information or data from other devices.

Here, the transceiver 530 may include a transmitter and a receiver. The transceiver 530 may further include antennas. The number of the antennas may be one or more.

In some embodiments, the processor 510 may implement functions of the processing unit in the first communication device, or the processor 510 may implement functions of the processing unit in the second communication device, which is not repeated here for the sake of brevity.

In some embodiments, the transceiver 530 may implement functions of the communication unit in the first communication device, which is not repeated here for the sake of brevity.

In some embodiments, the transceiver 530 may implement functions of the communication unit in the second communication device, which is not repeated here for the sake of brevity.

In some embodiments, the communication device 500 may specifically be the first communication device in the embodiments of the disclosure, and the communication device 500 may implement corresponding flows implemented by the first communication device in each method of the embodiments of the disclosure, which is not repeated here for the sake of brevity.

In some embodiments, the communication device 500 may specifically be the second communication device in the embodiments of the disclosure, and the communication device 500 may implement corresponding flows implemented by the second communication device in each method of the embodiments of the disclosure, which is not repeated here for the sake of brevity.

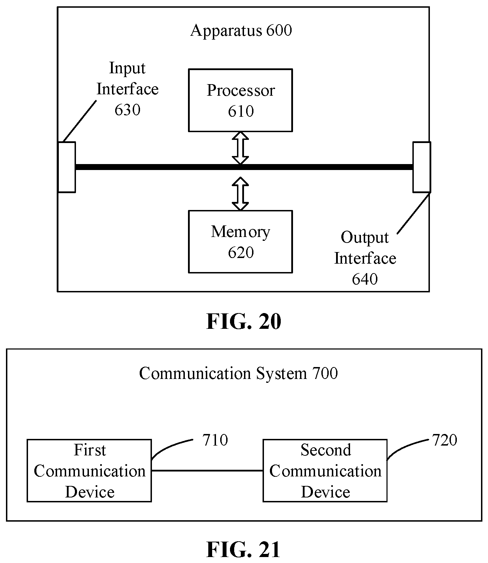

FIG. 20 is a schematic diagram of a structure of an apparatus of an embodiment of the disclosure. The apparatus 600 shown in FIG. 20 includes a processor 610. The processor 610 may call and run a computer program in a memory to implement the method in the embodiments of the disclosure.

In some embodiments, as shown in FIG. 20, the apparatus 600 may further include a memory 620. The processor 610 may call and run a computer program in the memory 620 to implement the method in the embodiments of the disclosure.

The memory 620 may be a separate component independent of the processor 610, or may be integrated in the processor 610.

In some embodiments, the apparatus 600 may further include an input interface 630. The processor 610 may control the input interface 630 to communicate with other devices or chips, specifically, to acquire information or data from other devices or chips. Optionally, the processor 610 may be located within or outside of the chip.

In some embodiments, the processor 610 may implement functions of the processing unit in the second communication device, or the processor 610 may implement functions of the processing unit in the first communication device, which is not repeated here for the sake of brevity.

In some embodiments, the input interface 630 may implement functions of the communication unit in the second communication device, or the input interface 630 may implement functions of the communication unit in the first communication device.

In some embodiments, the apparatus 600 may further include an output interface 640. The processor 610 may control the output interface 640 to communicate with other devices or chips, specifically, to output information or data to other devices or chips. Optionally, the processor 610 may be located within or outside of the chip.

In some embodiments, the output interface 640 may implement functions of the communication unit in the second communication device, or the output interface 640 may implement functions of the communication unit in the first communication device.

In some embodiments, the apparatus may be applied to the first communication device in the embodiments of the disclosure, and the apparatus may implement corresponding flows implemented by the first communication device in each method of the embodiments of the disclosure, which is not repeated here for the sake of brevity.

In some embodiments, the apparatus may be applied to the second communication device in the embodiments of the disclosure, and the apparatus may implement corresponding flows implemented by the second communication device in each method of the embodiments of the disclosure, which is not repeated here for the sake of brevity.

In some embodiments, the apparatus referred to in the embodiments of the disclosure may also be a chip. For example, it may be a system-level chip, a system chip, a chip system, a system-on-chip, or the like.

FIG. 21 is a schematic block diagram of a communication system 700 provided by an embodiment of the disclosure. As shown in FIG. 21, the communication system 700 includes a second communication device 710 and a first communication device 720.

Here, the second communication device 710 may be configured to implement corresponding functions implemented by the second communication device in the above methods, and the first communication device 720 may be configured to implement corresponding functions implemented by the first communication device in the above methods, which is not repeated here for the sake of brevity.

It is to be understood that the processor in the embodiments of the disclosure may be an integrated circuit chip with a signal processing capability. In an implementation process, various operations in the above method embodiments may be completed by a hardware integrated logic circuit or instructions in the form of software in the processor. The above processor may be a general purpose processor, a Digital Signal Processor (DSP), an Application Specific Integrated Circuit (ASIC), a Field Programmable Gate Array (FPGA) or other programmable logic devices, discrete gates or transistor logic devices, or discrete hardware components. Various methods, operations and logic block diagrams disclosed in the embodiments of the disclosure may be implemented or executed. The general purpose processor may be a microprocessor, or the processor may be any conventional processor or the like. Operations in combination with methods disclosed in the embodiments of the disclosure may be directly embodied to be executed and completed by a hardware decoding processor, or by a combination of hardware and software modules in the decoding processor. The software module may be located in a mature storage medium in the art, such as a Random Access Memory, a flash memory, a Read-Only Memory, a Programmable Read-Only Memory, an Electrically Erasable Programmable Memory, a register, or the like. The storage medium is located in the memory, and the processor reads the information in the memory to complete the operations of the above methods in combination with its hardware.

It is to be understood that the memory in the embodiments of the disclosure may be a volatile memory or a non-volatile memory, or may include a volatile memory and a non-volatile memory. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), and is used as an external high-speed cache. It is exemplarily but unlimitedly illustrated that RAMs in various forms may be used, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), or a Direct Rambus RAM (DR RAM). It is to be noted that the memory of the systems and methods described herein is intended to include memories of these and any other proper types, but is not limited thereto.

It is to be understood that the above memory is exemplarily but unlimitedly illustrated. For example, the memory in the embodiments of the disclosure may further be an SRAM, a DRAM, an SDRAM, a DDR SDRAM, an ESDRAM, an SLDRAM, a DR RAM, or the like. That is to say, the memory in the embodiments of the disclosure is intended to include memories of these and any other proper types, but is not limited thereto.

An embodiment of the disclosure further provides a computer-readable storage medium configured to store a computer program.

In some embodiments, the computer-readable storage medium may be applied to the first communication device in the embodiments of the disclosure, and the computer program enables a computer to execute corresponding flows implemented by the first communication device in each method of the embodiments of the disclosure, which is not repeated here for the sake of brevity.

In some embodiments, the computer-readable storage medium may be applied to the second communication device in the embodiments of the disclosure, and the computer program enables a computer to execute corresponding flows implemented by the second communication device in each method of the embodiments of the disclosure, which is not repeated here for the sake of brevity.

An embodiment of the disclosure further provides a computer program product, which includes computer program instructions.

In some embodiments, the computer program product may be applied to the first communication device in the embodiments of the disclosure, and the computer program instructions enable a computer to execute corresponding flows implemented by the first communication device in each method of the embodiments of the disclosure, which is not repeated here for the sake of brevity.

In some embodiments, the computer program product may be applied to the second communication device in the embodiments of the disclosure, and the computer program instructions enable a computer to execute corresponding flows implemented by the second communication device in each method of the embodiments of the disclosure, which is not repeated here for the sake of brevity.

An embodiment of the disclosure further provides a computer program.

In some embodiments, the computer program may be applied to the first communication device in the embodiments of the disclosure, and the computer program, when run on a computer, enables the computer to execute corresponding flows implemented by the first communication device in each method of the embodiments of the disclosure, which is not repeated here for the sake of brevity.

In some embodiments, the computer program may be applied to the second communication device in the embodiments of the disclosure, and the computer program, when run on a computer, enables the computer to execute corresponding flows implemented by the second communication device in each method of the embodiments of the disclosure, which is not repeated here for the sake of brevity.

Those of ordinary skill in the art may realize that units and algorithm steps of each example described in combination with the embodiments disclosed herein may be implemented by electronic hardware, or a combination of computer software and electronic hardware. Whether these functions are executed in a hardware or software manner depends on specific applications and design constraints of the technical solutions. Professionals may implement the described functions for each specific application by using different methods, but such implementation shall not be regarded as outside the scope of the disclosure.

Those skilled in the art may clearly understand that for convenient and brief description, specific operation processes of the systems, apparatuses and units described above may be referred to corresponding processes in the above method embodiments and will not be repeated here.

In several embodiments provided by the disclosure, it is to be understood that the disclosed systems, apparatuses and methods may be implemented in other manners. For example, the apparatus embodiments described above are only schematic. For example, division of the units is only a kind of logic function division, and other division manners may be adopted during a practical implementation. For example, multiple units or components may be combined or integrated into another system, or some features may be neglected or not executed. In addition, coupling or direct coupling or communication connection between various displayed or discussed components may be indirect coupling or communication connection through some interfaces, apparatuses or units, and may be electrical, mechanical, or in other forms.

Units described as separate components may or may not be physically separated, and components displayed as units may or may not be physical units, that is, may be located in the same place, or may also be distributed to multiple network units. Part or all of the units may be selected according to a practical requirement to implement the purpose of the solutions of the embodiments.

In addition, various function units in various embodiments of the disclosure may be integrated into a processing unit, or each unit may physically exist independently, or two or more than two units may be integrated into a unit.

When implemented in form of a software function unit and sold or used as an independent product, the functions may be stored in a computer-readable storage medium. Based on such understanding, the technical solution of the disclosure substantially or parts making contributions to the related art or part of the technical solution may be embodied in form of a software product. The computer software product is stored in a storage medium, including several instructions for enabling a computer device (which may be a personal computer, a server, a network device, or the like) to execute all or part of the operations of the methods in various embodiments of the disclosure. The above storage medium includes various media capable of storing program codes, such as a USB disk, a mobile hard disk, a ROM, a RAM, a magnetic disk, an optical disk, or the like.

The above are only specific implementations of the disclosure, but the scope of protection of the disclosure is not limited thereto. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A wireless communication method, comprising:

   receiving, by a first communication device, a target signal;
   wherein the target signal is a signal carrying information through a signal amplitude, the target signal comprises a first signal and a second signal, the first signal is at a first level, the second signal is at a second level, and the first level is higher than the second level;
   wherein a subcarrier carrying the first signal is associated with a first modulation mode and/or a first constellation point; and a subcarrier carrying the second signal is associated with a second modulation mode and/or a second constellation point, or the subcarrier carrying the second signal is an empty subcarrier.

2. The method of claim **1,** wherein
   the first modulation mode and/or the first constellation point are/is determined based on the second modulation mode and/or the second constellation point.

3. The method of claim 1 or 2, wherein

   the first modulation mode and/or the first constellation point are/is specified by a protocol, or the first modulation mode and/or the first constellation point are/is configured or indicated by a network device; and/or
   the second modulation mode and/or the second constellation point are/is specified by the protocol, or the second modulation mode and/or the second constellation point are/is configured or indicated by the network device.

4. The method of claim 1 or 2, further comprising:

   receiving, by the first communication device, first information;
   wherein the first information is used to configure or indicate at least one first combination, and the first combination is a combination of: a modulation mode and a constellation point associated with the subcarrier carrying the first signal, and a modulation mode and a constellation point associated with the subcarrier carrying the second signal.

5. The method of claim 4, wherein
   the first information is carried by one of:
   a Radio Resource Control (RRC) signaling, a Media Access Control Control Element (MAC CE), Downlink Control Information (DCI), a PC5-RRC signaling, or Sidelink Control Information (SCI).

6. The method of claim 1 or 2, wherein
   a combination of a modulation mode and a constellation point associated with the subcarrier carrying the first signal, and a modulation mode and a constellation point associated with the subcarrier carrying the second signal is specified by a protocol.

7. The method of any one of claims 1 to 6, wherein

   the first modulation mode belongs to a first modulation mode set, and the second modulation mode belongs to a second modulation mode set;
   wherein a modulation mode in the first modulation mode set is specified by a protocol, or the modulation mode in the first modulation mode set is configured or indicated by a network device; and/or a modulation mode in the second modulation mode set is specified by the protocol, or the modulation mode in the second modulation mode set is configured or indicated by the network device.

8. The method of any one of claims 1 to 7, wherein

   the first constellation point belongs to a first constellation point set, and the second constellation point belongs to a second constellation point set;
wherein a constellation point in the first constellation point set is specified by a protocol, or the constellation point in the first constellation point set is configured or indicated by a network device; and/or a constellation point in the second constellation point set is specified by the protocol, or the constellation point in the second constellation point set is configured or indicated by the network device.

9. The method of any one of claims 1 to 8, wherein
   a time-frequency resource, on which the second signal is located, is allowed to carry first target information.

10. The method of claim 9, wherein
    the first modulation mode and/or the first constellation point are/is determined based on a modulation mode adopted by the first target information carried by the time-frequency resource on which the second signal is located.

11. The method of claim 10, wherein the first modulation mode belongs to a first modulation mode set, and the modulation mode adopted by the first target information belongs to a third modulation mode set;
    wherein a modulation mode in the first modulation mode set is specified by a protocol, or the modulation mode in the first modulation mode set is configured or indicated by a network device; and/or a modulation mode in the third modulation mode set is specified by the protocol, or the modulation mode in the third modulation mode set is configured or indicated by the network device.

12. The method of any one of claims 9 to 11, wherein
    the first target information comprises at least one of: a Physical Downlink Shared Channel (PDSCH), a Physical Downlink Control Channel (PDCCH), a Physical Sidelink Shared Channel (PSSCH), a Physical Sidelink Control Channel (PSCCH), a Physical Uplink Shared Channel (PUSCH), a Physical Uplink Control Channel (PUCCH), a Channel State Information Reference Signal (CSI-RS), or a Demodulation Reference Signal (DMRS).

13. The method of any of claims 1 to 12, wherein Power Per Resource Element (EPRE) of the subcarrier carrying the first signal is different from EPRE of the subcarrier carrying the second signal.

14. The method of claim 13, wherein
    a power bias between the EPRE of the subcarrier carrying the first signal and second target information is greater than a power bias between the EPRE of the subcarrier carrying the second signal and the second target information.

15. The method of claim 14, wherein the second target information comprises at least one of: a Secondary Synchronization Signal (SSS), a Channel State Information Reference Signal (CSI-RS), a Demodulation Reference Signal (DMRS), a Physical Downlink Shared Channel (PDSCH), a Physical Uplink Shared Channel (PUSCH), or a Physical Sidelink Control Channel (PSCCH).

16. The method of any one of claims 13 to 15, wherein

    the EPRE of the subcarrier carrying the first signal is specified by a protocol, or the EPRE of the subcarrier carrying the first signal is configured or indicated by a network device; and/or
    the EPRE of the subcarrier carrying the second signal is specified by the protocol, or the EPRE of the subcarrier carrying the second signal is configured or indicated by the network device.

17. The method of any one of claims 13 to 16, further comprising:

    receiving, by the first communication device, second information;
    wherein the second information is used to configure or indicate at least one second combination, and the second combination is a combination of: a modulation mode, a constellation point and EPRE associated with the subcarrier carrying the first signal, and a modulation mode, a constellation point and EPRE associated with the subcarrier carrying the second signal.

18. The method of claim 17, wherein
    the second information is carried by one of: a Radio Resource Control (RRC) signaling, a Media Access Control Control Element (MAC CE), Downlink Control Information (DCI), a PC5-RRC signaling, or Sidelink Control Information (SCI).

19. The method of any one of claims 13 to 16, wherein
a combination of a modulation mode, a constellation point and EPRE associated with the subcarrier carrying the first signal, and a modulation mode, a constellation point and EPRE associated with the subcarrier carrying the second signal is specified by a protocol.

20. The method of any one of claims 1 to 19, wherein
the target signal is a Wake Up Signal (WUS).

21. A wireless communication method, comprising:

sending, by a second communication device, a target signal;
wherein the target signal is a signal carrying information through a signal amplitude, the target signal comprises a first signal and a second signal, the first signal is at a first level, the second signal is at a second level, and the first level is higher than the second level;
wherein a subcarrier carrying the first signal is associated with a first modulation mode and/or a first constellation point; and a subcarrier carrying the second signal is associated with a second modulation mode and/or a second constellation point, or the subcarrier carrying the second signal is an empty subcarrier.

22. The method of claim 21, wherein
the first modulation mode and/or the first constellation point are/is determined based on the second modulation mode and/or the second constellation point.

23. The method of claim 21 or 22, wherein

the first modulation mode and/or the first constellation point are/is specified by a protocol, or the first modulation mode and/or the first constellation point are/is configured or indicated by a network device; and/or
the second modulation mode and/or the second constellation point are/is specified by the protocol, or the second modulation mode and/or the second constellation point are/is configured or indicated by the network device.

24. The method of claim 21 or 22, further comprising:

sending, by the second communication device, first information;
wherein the first information is used to configure or indicate at least one first combination, and the first combination is a combination of: a modulation mode and a constellation point associated with the subcarrier carrying the first signal, and a modulation mode and a constellation point associated with the subcarrier carrying the second signal.

25. The method of claim 24, wherein
the first information is carried by one of:
a Radio Resource Control (RRC) signaling, a Media Access Control Control Element (MAC CE), Downlink Control Information (DCI), a PC5-RRC signaling, or Sidelink Control Information (SCI).

26. The method of claim 21 or 22, wherein
a combination of a modulation mode and a constellation point associated with the subcarrier carrying the first signal, and a modulation mode and a constellation point associated with the subcarrier carrying the second signal is specified by a protocol.

27. The method of any one of claims 21 to 26, wherein

the first modulation mode belongs to a first modulation mode set, and the second modulation mode belongs to a second modulation mode set;
wherein a modulation mode in the first modulation mode set is specified by a protocol, or the modulation mode in the first modulation mode set is configured or indicated by a network device; and/or a modulation mode in the second modulation mode set is specified by the protocol, or the modulation mode in the second modulation mode set is configured or indicated by the network device.

28. The method of any one of claims 21 to 27, wherein

the first constellation point belongs to a first constellation point set, and the second constellation point belongs to a second constellation point set;

wherein a constellation point in the first constellation point set is specified by a protocol, or the constellation point in the first constellation point set is configured or indicated by a network device; and/or a constellation point in the second constellation point set is specified by the protocol, or the constellation point in the second constellation point set is configured or indicated by the network device.

29. The method of any one of claims 21 to 28, wherein
a time-frequency resource, on which the second signal is located, is allowed to carry first target information.

30. The method of claim 29, wherein
the first modulation mode and/or the first constellation point are/is determined based on a modulation mode adopted by the first target information carried by the time-frequency resource on which the second signal is located.

31. The method of claim 30, wherein the first modulation mode belongs to a first modulation mode set, and the modulation mode adopted by the first target information belongs to a third modulation mode set;
wherein a modulation mode in the first modulation mode set is specified by a protocol, or the modulation mode in the first modulation mode set is configured or indicated by a network device; and/or a modulation mode in the third modulation mode set is specified by the protocol, or the modulation mode in the third modulation mode set is configured or indicated by the network device.

32. The method of any one of claims 29 to 31, wherein
the first target information comprises at least one of: a Physical Downlink Shared Channel (PDSCH), a Physical Downlink Control Channel (PDCCH), a Physical Sidelink Shared Channel (PSSCH), a Physical Sidelink Control Channel (PSCCH), a Physical Uplink Shared Channel (PUSCH), a Physical Uplink Control Channel (PUCCH), a Channel State Information Reference Signal (CSI-RS), or a Demodulation Reference Signal (DMRS).

33. The method of any of claims 21 to 32, wherein Power Per Resource Element (EPRE) of the subcarrier carrying the first signal is different from EPRE of the subcarrier carrying the second signal.

34. The method of claim 33, wherein
a power bias between the EPRE of the subcarrier carrying the first signal and second target information is greater than a power bias between the EPRE of the subcarrier carrying the second signal and the second target information.

35. The method of claim 34, wherein the second target information comprises at least one of: a Secondary Synchronization Signal (SSS), a Channel State Information Reference Signal (CSI-RS), a Demodulation Reference Signal (DMRS), a Physical Downlink Shared Channel (PDSCH), a Physical Uplink Shared Channel (PUSCH), or a Physical Sidelink Control Channel (PSCCH).

36. The method of any one of claims 33 to 35, wherein

the EPRE of the subcarrier carrying the first signal is specified by a protocol, or the EPRE of the subcarrier carrying the first signal is configured or indicated by a network device; and/or
the EPRE of the subcarrier carrying the second signal is specified by the protocol, or the EPRE of the subcarrier carrying the second signal is configured or indicated by the network device.

37. The method of any one of claims 33 to 36, further comprising:

sending, by the second communication device, second information;
wherein the second information is used to configure or indicate at least one second combination, and the second combination is a combination of: a modulation mode, a constellation point and EPRE associated with the subcarrier carrying the first signal, and a modulation mode, a constellation point and EPRE associated with the subcarrier carrying the second signal.

38. The method of claim 37, wherein
the second information is carried by one of: a Radio Resource Control (RRC) signaling, a Media Access Control Control Element (MAC CE), Downlink Control Information (DCI), a PC5-RRC signaling, or Sidelink Control Information (SCI).

39. The method of any one of claims 33 to 36, wherein
a combination of a modulation mode, a constellation point and EPRE associated with the subcarrier carrying the first signal, and a modulation mode, a constellation point and EPRE associated with the subcarrier carrying the second signal is specified by a protocol.

40. The method of any one of claims 21 to 39, wherein
the target signal is a Wake Up Signal (WUS).

41. A communication device being a first communication device, comprising:

a first communication unit, configured to receive a target signal;
wherein the target signal is a signal carrying information through a signal amplitude, the target signal comprises a first signal and a second signal, the first signal is at a first level, the second signal is at a second level, and the first level is higher than the second level;
wherein a subcarrier carrying the first signal is associated with a first modulation mode and/or a first constellation point; a subcarrier carrying the second signal is associated with a second modulation mode and/or a second constellation point, or the subcarrier carrying the second signal is an empty subcarrier.

42. A communication device being a second communication device, comprising:

a first communication unit, configured to send a target signal;
wherein the target signal is a signal carrying information through a signal amplitude, the target signal comprises a first signal and a second signal, the first signal is at a first level, the second signal is at a second level, and the first level is higher than the second level;
wherein a subcarrier carrying the first signal is associated with a first modulation mode and/or a first constellation point; a subcarrier carrying the second signal is associated with a second modulation mode and/or a second constellation point, or the subcarrier carrying the second signal is an empty subcarrier.

43. A terminal device comprising a processor and a memory, wherein the memory is configured to store a computer program, and the processor is configured to call and run the computer program stored in the memory for enabling the terminal device to perform the method of any one of claims 1 to 20.

44. A network device comprising a processor and a memory, wherein the memory is configured to store a computer program, and the processor is configured to call and run the computer program stored in the memory for enabling the network device to perform the method of any one of claims 21 to 40.

45. A chip, comprising a processor configured to call and run a computer program in a memory to enable a device having installed thereon the chip to perform the method of any one of claims 1 to 20.

46. A chip, comprising a processor configured to call and run a computer program in a memory to enable a device having installed thereon the chip to perform the method of any one of claims 21 to 40.

47. A computer-readable storage medium configured to store a computer program, wherein when the computer program is executed, the method of any one of claims 1 to 20 is implemented.

48. A computer-readable storage medium configured to store a computer program, wherein when the computer program is executed, the method of any one of claims 21 to 40 is implemented.

49. A computer program product comprising computer program instructions, wherein when the computer program instructions are executed, the method of any one of claims 1 to 20 is implemented.

50. A computer program product comprising computer program instructions, wherein when the computer program instructions are executed, the method of any one of claims 21 to 40 is implemented.

51. A computer program, wherein when the computer program is executed, the method of any one of claims 1 to 20 is implemented.

52. A computer program, wherein when the computer program is executed, the method of any one of claims 21 to 40 is

implemented.

**100**

**FIG. 1**

**FIG. 2**

**FIG. 3**

Information
Bit ──── WUR
Encoder

On ──── Bit '1'

Off ──── Bit '0'

Window ──── Analog and
RF

**FIG. 4**

MC-OOK
Symbol '1'    MC-OOK
Symbol '0'

**FIG. 5**

Power
Harvesting
Module │ Back Scattering
Communication
Module │ Low-Power
Computing
Module │ Sensor
Module

Power Supply/Trigger

Network
Device

Back Scattering
Communication    Zero-Power
Terminal

**FIG. 6**

Network Device — Carrier Signal — Zero-Power Terminal

TX — AMP

RX — LNA

Back Scattering Signal

Logic Processing Module | Power Harvesting Module

**FIG. 7**

RF — C +q -q — $R_L$

**FIG. 8**

$R_2$  $R_3$

Binary Coding

$L_2$  $L_1$  $C_1$  $R_L$  S

$C_2$

**FIG. 9**

__200__

| First Communication Device | | Second Communication Device |
|---|---|---|

S210, A second communication device sends a target signal. Here, the target signal is a signal carrying information through a signal amplitude. The target signal includes a first signal and a second signal. The first signal is at a first level, the second signal is at a second level, and the first level is higher than the second level. Here, a subcarrier carrying the first signal is associated with a first modulation mode and/or a first constellation point. A subcarrier carrying the second signal is associated with a second modulation mode and/or a second constellation point, or the subcarrier carrying the second signal is an empty subcarrier.

S220, A first communication device receives the target signal.

**FIG. 10**

Assigned to Data Transmission

Assigned to WUS Signal Transmission

Assigned to Data Transmission

Inverse Fast Fourier Transformation (IFFT)

Parallel to Serial Conversion

Digital to Analog Conversion (DAC)

RF Front End

**FIG. 11**

Modulation Depth

MC-OOK Symbol '1'        MC-OOK Symbol '0'

**FIG. 12**

Area A, WUS "1"

Q

Area B,
WUS "0"

I

**FIG. 13**

1   0   1   0   1   0   1   1

**FIG. 14**

"11111111"

**FIG. 15**

**FIG. 16**

**FIG. 17**

Communication Device 400

First Communication Unit 410

Second Communication Unit 420

Third Communication Unit 430

**FIG. 18**

Communication Device 500

Memory
520

Processor
510

Transceiver
530

**FIG. 19**

Apparatus 600

Input
Interface
630

Processor
610

Memory
620

Output
Interface
640

**FIG. 20**

Communication System 700

First
Communication
Device

710

Second
Communication
Device

720

**FIG. 21**

## INTERNATIONAL SEARCH REPORT

| International application No. |
| --- |
| **PCT/CN2022/131482** |

| A. | CLASSIFICATION OF SUBJECT MATTER |
| --- | --- |
| | H04L27/00(2006.01)i |

According to International Patent Classification (IPC) or to both national classification and IPC

| B. | FIELDS SEARCHED |
| --- | --- |

Minimum documentation searched (classification system followed by classification symbols)

IPC: H04L, H04W, H04Q

Documentation searched other than minimum documentation to the extent that such documents are included in the fields searched

Electronic data base consulted during the international search (name of data base and, where practicable, search terms used)

CNTXT; ENTXTC; WPABSC; VEN; CNKI; 3GPP: 目标, 信号, 幅度, 电平, 调制, 星座点, 星座图, 解调, 检测, 唤醒, target, signal, amplitude, level, modulation, constellation point, constellation diagram, demodulation, detection, wake-up, WUS

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 115150236 A (HUAWEI TECHNOLOGIES CO., LTD.) 04 October 2022 (2022-10-04) description, paragraphs [0065]-[0105], and figures 1-17 | 1-52 |
| A | WO 2022206464 A1 (HUAWEI TECHNOLOGIES CO., LTD.) 06 October 2022 (2022-10-06) entire document | 1-52 |
| A | CN 110557809 A (TELECOMMUNICATIONS TECHNOLOGY RESEARCH INSTITUTE CO., LTD.) 10 December 2019 (2019-12-10) entire document | 1-52 |
| A | US 11233625 B1 (NXP USA INC.) 25 January 2022 (2022-01-25) entire document | 1-52 |

☐ Further documents are listed in the continuation of Box C.    ☑ See patent family annex.

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| **22 March 2023** | **23 March 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/131482**

| Patent document cited in search report | | | Publication date (day/month/year) | Patent family member(s) | | | Publication date (day/month/year) |
|---|---|---|---|---|---|---|---|
| CN | 115150236 | A | 04 October 2022 | None | | | |
| WO | 2022206464 | A1 | 06 October 2022 | None | | | |
| CN | 110557809 | A | 10 December 2019 | WO | 2019233254 | A1 | 12 December 2019 |
| US | 11233625 | B1 | 25 January 2022 | None | | | |

Form PCT/ISA/210 (patent family annex) (July 2022)